Europäisches Patentamt

European Patent Office

Office européen des brevets

(19)

(11) **EP 0 729 562 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(51) Int Cl.⁶: **G01D 5/16**

(21) Anmeldenummer: **95900003.5**

(22) Anmeldetag: **17.11.1994**

(86) Internationale Anmeldenummer:
**PCT/AT94/00173**

(87) Internationale Veröffentlichungsnummer:
**WO 95/14213 (26.05.1995 Gazette 1995/22)**

(54) **POSITIONSMELDER FÜR DIE AUTOMATION**

POSITION INDICATOR FOR USE IN THE FIELD OF AUTOMATIC CONTROL

INDICATEUR DE POSITION APPLIQUE EN AUTOMATISATION

(84) Benannte Vertragsstaaten:
**AT DE**

(30) Priorität: **17.11.1993 AT 2331/93**
**14.04.1994 AT 774/94**

(43) Veröffentlichungstag der Anmeldung:
**04.09.1996 Patentblatt 1996/36**

(73) Patentinhaber:
- **Eisschiel, Heinz**
  **5121 Ostermiething (AT)**
- **Vasiloiu, Victor**
  **5121 Ostermiething (AT)**

(72) Erfinder: **VASILOIU, Victor**
**A-5121 Ostermiething (AT)**

(74) Vertreter: **Patentanwälte**
**BARGER, PISO & PARTNER**
**Biberstrasse 15**
**P.O. Box 333**
**1011 Wien (AT)**

(56) Entgegenhaltungen:
| | |
|---|---|
| EP-A- 0 048 983 | EP-A- 0 093 232 |
| EP-A- 0 235 750 | DE-A- 3 704 729 |
| FR-A- 1 326 955 | FR-A- 2 664 691 |
| US-A- 4 785 241 | US-A- 4 866 382 |
| US-A- 5 047 716 | |

**Beschreibung**

Die Erfindung betrifft eine magnetische Längen- bzw. Winkelmeßeinrichtung mit einem Permanentmagneten, an dem eine Feldplatte als Sensor mit vier Magnetowiderständen als Einzelsensoren angebracht ist und mit einem Maßstab, dessen magnetische Reluktanz sich entlang der Maßstablängsachse mit dem Schritt periodisch ändert, indem Bereiche hoher Reluktanz mit Länge und Bereiche niedriger Reluktanz mit gleicher Länge einander abwechseln, wobei die Einzelsensoren in Richtung der Maßstablängsachse mit Abstand zueinander angeordnet sind, insbesonders für die Automatisierung.

Eine solche Vorrichtung ist aus der DE-A 32 14 794, entsprechend der EP-A 0 093 232 (Heidenhain) bekannt. Dabei sind im Ausführungsbeispiel für die Einzelsensoren nur Hall-Sensoren angegeben, die als primäre Meßsignale die Hall-Spannung liefern. Die Verrechnung dieser primären Meßsignale erfolgt über eine aufwendige Schaltung mit zumindest sechs Abgleichwiderständen.

Die unterschiedliche Temperaturdrift dieser Abgleichwiderstände im Vergleich zur Temperaturdrift der Hall-Sensoren ist ein weiterer, wesentlicher Nachteil dieser Vorrichtung.

Dazu kommt, daß die geometrischen Bedingungen für die Größe der Einzelsensoren den Erhalt bevorzugter sinusförmiger Meßsignale bei gleichförmiger Bewegung des Sensors entlang des Maßstabes nicht zuläßt, da die Längserstreckung der Einzelsensoren kleiner als t/4 sein soll, wobei t die Teilung des Maßstabes ist. Damit verändert sich der magnetische Fluß für den Einzelsensor während einer Strecke von zumindest t/4 nicht, da er sich in diesem Bereich zur Gänze entweder gegenüber einem Steg oder gegenüber einer Lücke des Maßstabes befindet.

Es kann somit eine derartige Vorrichtung die Position des Sensors nur bis auf t/4 angeben, egal welcher Aufwand meßtechnisch und bei der Signalauswertung betrieben wird. Dazu kommt, daß die gesamte Anordnung extrem empfindlich auf Änderungen des Vertikalabstandes zwischen den Sensoren und dem Maßstab (Abtastabstand) ist und es bei Abweichungen über etwa 0,02 mm zu Meßfehlern kommt. Speziell bei geradlinigen Maßstäben ist die Einhaltung derartiger Toleranzen über größere Maßstablängen aufwendig und kostspielig.

Ein anderer Positionsmelder für Drehbewegungen ist aus der EP-A 0 048 983 (Hitachi) bekannt. Diese Vorrichtung arbeitet mit einem periodisch ummagnetisierten Maßrad und verfügt über einen Kompensationssensor, der über einem unmagnetisierten Bereich des Maßrades angebracht ist. Dadurch ist es möglich, auch bei Änderungen des Abtastabstandes die Mittellage des Meßsignales und somit die Lage dessen Nulldurchganges konstant zu halten. Die Amplitude des Meßsignales ändert sich aber mit hoher Potenz. Da eine hohe Genauigkeit des Umfanges und der Lagerung bei rotierenden Systemen mit relativ einfachen Mitteln erreicht werden kann, spielt diese Änderung keine so gravierende Rolle wie bei linearen Systemen.

Ein wieder anderer Positionsmelder ist beispielsweise aus der DE-OS 38 27 113 bekannt. Dabei bewegt sich ein Sensor, insbesonders eine Feldplatte, möglichst knapp über den Zahnspitzen einer magnetischen Zahnstange, wobei sowohl der Sensor als auch die Zahnstange in einem geschlossenen magnetischen Kreis liegt, sodaß der Sensor beim Überfahren der Zahnstange eine periodische Widerstandsänderung erfährt. Diese Änderung wird ausgewertet und zur Bestimmung der Lage bzw. der Geschwindigkeit zwischen Sensor und Zahnstange verwendet.

Um Fehler und Ungenauigkeiten dieser Vorrichtung auszuschalten oder zumindest zu minimieren ist ein besonderer Konzentrator vorgesehen, der ähnlich einem Polschuh wirkt, und die Signalamplitude erhöht. Nachteilig an diesem System ist der große Platzbedarf, sowohl neben als auch oberhalb der Zahnstange und die Notwendigkeit, eine Zahnstange vorzusehen, die überall dort, wo sie nicht von Haus aus vorgesehen ist, erst einmal an einem passenden Teil der Vorrichtung, deren Lage bzw. Geschwindigkeit gemessen werden soll, angebracht werden muß.

Aus der DE-OS-39 26 328 ist eine ähnliche Vorrichtung bekannt, bei der zur Erhöhung der Meßgenauigkeit mehrere, in Richtung der gegenseitigen Bewegung der beiden Bauteile nebeneinander liegende, entsprechend der Stegteilung geteilte, magnetische Teil flüsse zu einem Gesamtfluß zusammengefaßt werden. Bei dieser Druckschrift ist insbesonders daran gedacht, eine Schiebelehre mit einem derartigen Meßsystem und einer zugehörigen digitalen Anzeige zu versehen.

Zur Erzielung eines brauchbaren Sensorsignales ist ein entsprechend groß dimensionierter Meßkopf vorgesehen, wie dies insbesondere aus den Fig. 1 und 6 dieser Druckschrift hervorgeht. Es ist leicht einsichtig, daß eine derartige Anordnung äußerst empfindlich gegenüber Abtastabstandsänderungen ist und darüber hinaus einen großen Platzbedarf hat.

Eine andere, damit ähnliche Vorrichtung ist aus der DE-OS 37 04 729 bekannt. Dabei wird auf einem magnetisierbaren, zahnstangenartigen Maßstab durch ein Joch, das auch den Sensor trägt, ein magnetisches Wechselfeld induziert, das vom Sensor, der symmetrisch im Inneren des Joches angeordnet ist, in Abhängigkeit seiner Lage zu den Zähnen des Maßstabes erfaßt und anschließend ausgewertet wird.

Diese Vorrichtung ist aufwendig in ihrem Aufbau, benötigt viel Platz und ist empfindlich gegenüber Abtastabstandsänderungen.

Allen vorbekannten Systemen ist gemeinsam, daß sie als Maßstab entweder eine Zahnstange benutzen, was die Auflösung, die Meßlänge und die erzielbare Genauigkeit begrenzt, eine aufwendige Bearbeitung erfordert und einen großen Platzbedarf mit sich bringt, oder eine magnetisch inaktive Dünnschichtteilung auf einem dielektrischen Substrat, was schwache Meßsignale durch die nur geringe Induktionsänderung entlang der Meßbahn bedingt. Die Herstellung aller vorbekannter Maßstäbe ist aufwendig und entsprechend teuer und dennoch Empfindlich auf Änderungen des Abtastabstandes.

Es ist die Aufgabe der Erfindung, eine Vorrichtung der eingangs genannten Art zu schaffen, die die aufgezeigten Nachteile nicht aufweist, mit einer geringen Bauhöhe auskommt, wobei auch über den Platz neben dem Maßstab verfügt werden kann und insbesonders gegen Änderungen des Abtastabstandes unempfindlich ist.

Erfindungsgemäß werden diese Ziele durch die im kennzeichnenden Teil des Anspruches 1 angegebenen Maßnahmen erreicht.

Die Erfindung beruht auf der Erkenntnis, daß eine derartige Vorrichtung es erlaubt, besonders reine Signale zu erhalten, bei denen die Sinusschwingung (bei gleichförmiger Bewegung entlang des Maßstabes) tatsächlich um den Nullpunkt erfolgt, was für die Weiterverarbeitung der Signale günstig ist.

Unter Feldplatten werden Sensoren verstanden, die Einzelsensoren aufweisen, die aus Magnetowiderständen bestehen. Derartige Feldplatten bilden feste Einheiten.

Darüber hinaus wird bei der bevorzugten Verwendung eines mit Vertiefungen oder Ausnehmungen versehenen Weicheisenbandes als Maßstab durch die technologisch erzielbare Feinheit der Meßperiode des Maßstabes, durch die hohe geometrische Stabilität des korrosionsfreien Bandmaterials und durch die einfache Anregung der Magnetowiderstände durch einen einzigen, kleinen hoch koerzitiven Magneten erreicht:

- daß jeder Steg des Maßstabes einzeln abgetastet werden kann, wobei Polschuhe bzw. magnetische Konzentratoren überflüssig sind,
- daß keine Meßstörungen durch Temperaturänderungen auftreten,
- daß keine Meßstörungen durch externe magnetische Felder auftreten und schließlich,
- daß auch über längere Zeiträume keine Parameterdrift auftritt.

Bevorzugt werden die Vertiefungen bzw. Ausnehmungen mittels eines fotolitografischen Verfahrens oder durch Verwendung eines Laser- oder Plasmastrahles geschaffen, doch ist bei nicht zu großen Ansprüchen an die Genauigkeit auch eine Herstellung durch Stanzen möglich. Die dadurch im Vergleich zum Stand der Technik erzielte Genauigkeitserhöhung ist von einer Kostenreduktion begleitet, da die spanende Bearbeitung der Zahnstange entfällt.

In einer bevorzugten Ausführungsform besteht der Maßstab aus einem Streifen aus Weicheisen mit einer Dicke von unter 1 mm, besonders bevorzugt von etwa 0,2 mm.

Die Erfindung wird an Hand der folgenden Beschreibung unter Bezugnahme auf die Zeichnung näher beschrieben. Dabei zeigt:

- die Fig. 1 eine Seitenansicht einer erfindungsgemäßen Meßanordnung,
- die Fig. 2 die elektrische Schaltung der Einzelsensoren,
- die Fig. 3 eine Ansicht des erfindungsgemäß verwendeten Maßstabes im Schrägriß,
- die Fig. 4 eine erfindungsgemäße Variante,
- die Fig. 5 eine bevorzugte Form des Maßstabes im Schnitt und
- die Fig. 6 eine spezielle Ausgestaltung eines Maßstabes in schräger Ansicht.

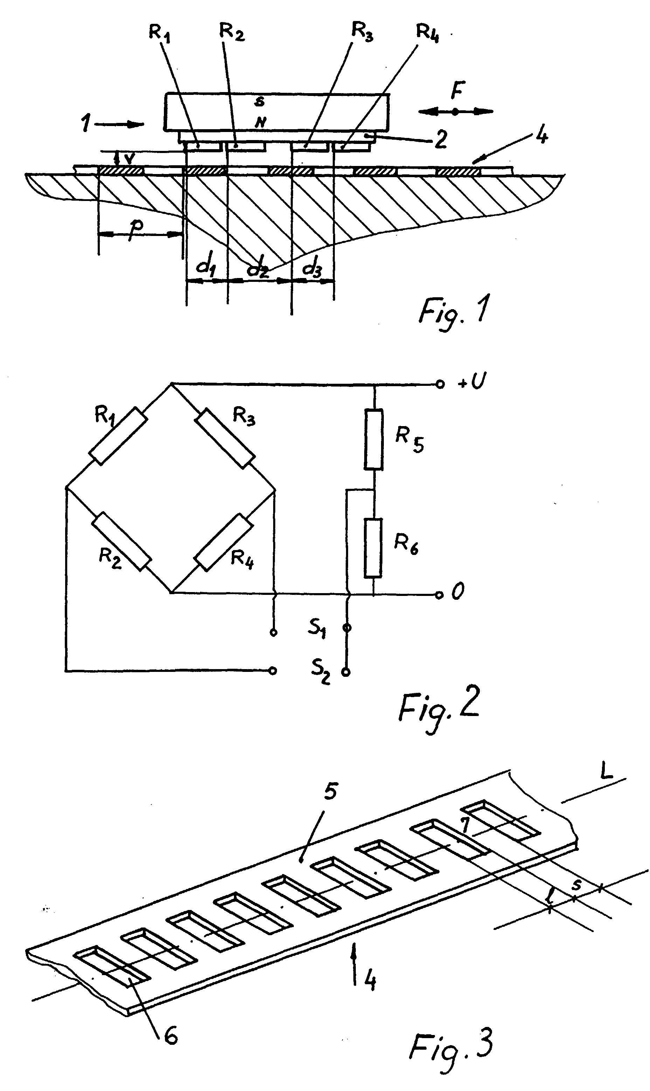

In Fig. 1 ist eine Feldplatte 1 mit vier Einzelsensoren (Magnetowiderstände) $R_1$, $R_2$, $R_3$ und $R_4$, die mittels eines Substrates 2 auf einem Permanentmagneten 3 befestigt sind, erkennbar. Die Feldplatte 1 - der Sensor - ist in Richtung des Doppelpfeiles F entlang eines Maßstabes 4 verschieblich. Die Widerstände $R_1$, $R_2$, $R_3$ und $R_4$ können Einzelwiderstände sein, oder aus mehreren, elektrisch in Serie geschalteten und geometrisch entsprechend dem zugehörigen Maßstabes 4 versetzten Widerständen bestehen.

Der Maßstab 4 ist beispielsweise am Bett einer Werkzeugmaschine und der Sensor 1 am Schlitten, der auf dem Bett fährt, montiert.

Der Maßstab 4, in Fig. 3 im vergrößerten Maßstab dargestellt, besteht aus einem Band 5 aus Weicheisen mit einer Längsachse L, die keine Symmetrieachse sein muß, in dem im wesentlichen rechteckige Ausnehmungen 6, die durch Stege 7 des Grundmaterials voneinander getrennt sind, vorgesehen sind. Die Längserstreckung 1 der Ausnehmungen 6 ist bevorzugt zumindest im wesentlichen gleich der Längserstreckung s der Stege 7 und damit gilt: s = 1 = p/2; wobei p der Schritt des Maßstabes ist.

Die Einzelsensoren Ri sind (geometrisch, nicht elektrisch) am Sensor 1 in Richtung der Maßstablängsachse L zueinander versetzt angeordnet und weisen folgende Abstände untereinander auf:

$$d_1 = d_3 = (2k + 1)p/2$$

$$d_2 = kp - p/4,$$

wobei

k in jeder der beiden Gleichungen unabhängig voneinander eine ganze, positive Zahl einschließlich der Null,
p der Schritt des Maßstabes,
$d_1$ der Abstand zwischen einem äußeren Einzelsensor und seinem Nachbarn und
$d_2$ der Abstand zwischen den inneren Einzelsensoren ist, wodurch bei genau fluchtender Lage des Sensors mit dem Maßstab jeweils ein äußerer Einzelsensoren mit seinem Nachbarn genau über einer Ausnehmung 6 oder einem Steg 7 steht und der andere äußere Einzelsensor mit seinem Nachbarn über dem komplementären Maßstabteil.

Bevorzugt liegt p in der Größenordnung von 1 mm. Wenn eine Verbesserung der Auflösung erreicht werden soll und entsprechend dimensionierte Feldplatten zur Verfügung stehen, kann p auch kleiner gewählt werden. Es ist selbstverständlich auch möglich, von einer gegebenen Feldplattengeometrie ausgehend einen Maßstab zu entwerfen, was in Anbetracht der einfacheren Herstellung des erfindungsgemäßen Maßstabes sogar bevorzugt wird.

Besonders bevorzugt wird, daß die Länge jedes Einzelsensors $R_i$ in Richtung der Maßstablängsachse L gleich p/2 ist, wodurch bei gleichzeitiger Einhaltung der oben angegebenen bevorzugten Bedingung 1 = s = p/2 ein besonders reines Sinussignal während der Bewegung des Sensors entlang des Maßstabes erhalten wird.

Bei den oben angegebenen geometrischen Bedingungen werden bei der elektrischen Verrechnung der erhaltenen Einzelsignale der Einzelsensoren $R_1$, $R_2$, $R_3$ und $R_4$, mit der in Fig. 2 gezeigten Schaltung, einer üblichen Wheatstone-Brücke, zwei Signale $S_1$ und $S_2$ gleicher Amplitude und um 90° phasenversetzt, erhalten, die in der genannten, genau fluchtenden Lage des Sensors 1 zum Maßstab 4, besonders ausgeprägt sind. Es sind Abweichungen der geometrischen Beziehungen bis zu etwa 10 % ohne wesentlichen Verlust der Meßgenauigkeit möglich.

Der vertikale Abstand V zwischen den Unterseiten der Einzelsensoren und der Oberseite des Maßstabes kann bei den oben angegebenen geometrischen Bedingungen zwischen 0,2 und 1,0 mm liegen und beträgt bevorzugt etwa 0,6 mm. Bei einer Verkleinerung dieses Abstandes kommt es während der Relativbewegung zwischen Sensor und Maßstab zu Verzerrungen der Meßsignale durch die harmonischen Oberwellen, bei einer Vergößerung zu einer flacheren Sinuskurve der Meßsignale, obwohl das erfindungsgemäße Meßsystem gegenüber Abtastabstandsänderungen wesentlich unempfindlicher ist als herkömmliche Meßeinrichtungen.

Die endgültige Auswertung der erhaltenen Signale $S_1$ und $S_2$ erfolgt auf üblichem Weg und bedarf hier keiner weiteren Erörterung.

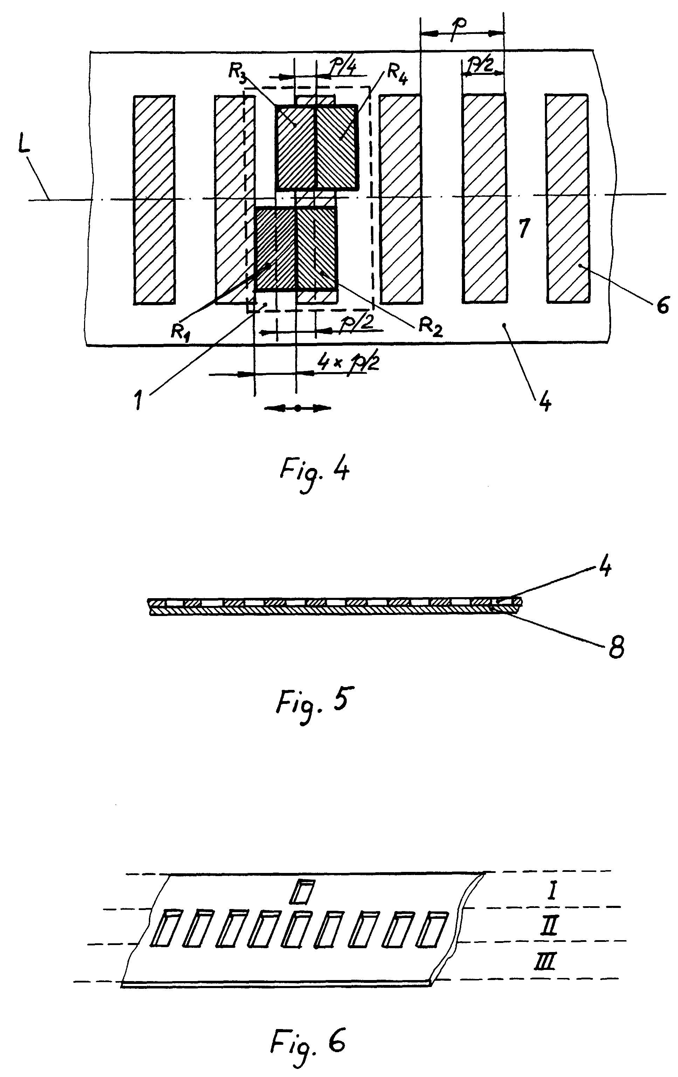

Aus Fig. 4 ist eine Variante ersichtlich, bei der in der obigen Gleichung für $d_2$ gilt: k = 0. Durch eine im Vergleich zur Breite der Einzelsensoren $R_i$ etwas größere Breite des Maßstabes 4 wird es ermöglicht, die Länge des Sensors in Richtung der Maßstablängsachse L wesentlich zu reduzieren, da die Einzelsensoren $R_3$, $R_4$ gegenüber den Einzelsensoren $R_1$, $R_2$ schräg versetzt angeordnet sind.

Die Erfindung ist nicht auf das dargestellte Ausführungsbeispiel beschränkt, sondern kann verschiedentlich abgewandelt werden. So ist es möglich, die Schrittweite p (und damit die Frequenz der Sinusschwingungen von $S_1$ und $S_2$) in weitem Rahmen dem jeweiligen Verwendungszweck anzupassen, es kann der Sensor eine längere Form aufweisen, insbesonders wenn k groß gewählt wird.

Es können die verschiedensten Anwendungsgebiete ins Auge gefaßt werden, beispielsweise die Lage- und/oder Geschwindigkeitsbestimmung einer Kranbrücke auf ihren Schienen oder einer Katze auf der Kranbrücke. Prinzipiell sind alle Bewegungen entlang einer vorgegebenen Bahn, sei sie geradlinig oder gebogen (Winkelbestimmung) möglich. Da der Maßstab zufolge seiner geringen Dicke gut biegbar ist, sind auch Messungen entlang Bahnen mit veränderlicher Krümmung möglich, soferne nur die Spurlage und der Vertikalabstand zwischen Sensor und Maßstab gewahrt bleibt.

In einer bevorzugten Ausgestaltung der Erfindung ist zur Minimierung der Einflüsse des Unterlagsmaterials, auf dem der Maßstab befestigt ist und zur Abschirmung gegen magnetische Störfelder vorgesehen, daß der eigentliche Maßstab 4 auf einem dünnen, blanken, durchgehenden Band 8 aus weichmagnetischem Material aufgebracht ist. Dies ist in Fig. 5 dargestellt. Die Verbindung der beiden Bänder 4, 8 kann beispielsweise durch Kleben oder Punktschweißen erfolgen.

Um die erfindungsgemäß erreichte Unempfindlichkeit gegen Schwankungen des Abtastabstandes weiter zu erhöhen, wird vorzugsweise folgende Kompensation vorgenommen: Durch einen Kompensationssensor, der kein erfindungsgemäß verwendeter Magnetowiderstand sein muß, aber bevorzugt ist, wird ein Kompensationssignal erzeugt. Der Kompensationssensor ist dabei geometrisch über dem Maßstab, aber neben dem Bereich des Maßstabes, dessen Reluktanz sich periodisch ändert (somit im Bereich einer "Blankspur"), angeordnet und bevorzugt in den Meßkopf integriert, jedenfalls aber fest mit ihm verbunden.

Das vom Kompensationssensor erhaltene Kompensationssignal ändert sich daher nur in Abhängigkeit vom Abtastabstand und zufolge äußerer Störungen. Diese Einflüsse wirken gleichermaßen auch auf die eigentliche Meßspur bzw. die Sensoren bzw. das Meßsignal, wodurch eine Amplitudenkompenstion des Meßsignals anhand des Kompensationssignals leicht möglich ist.

Es ist möglich und in vielen Fällen bevorzugt, den Maßstab mit einer filmartigen Schutzschichte (Klebefolie aus Kunststoff) gegen Beschädigungen und Verunreinigungen abzudecken. Der vertikale Abstand V wird in solchen Fällen bis zur Oberseite des Weicheisenbandes gemessen, nicht bis zur Oberseite des Schutzfilmes.

Die Breite des Maßstabes kann in weiten Grenzen frei gewählt werden, die minimale Breite der Ausnehmungen 6 quer zur Maßstablängsachse L ist durch die Abmessungen der Einzelsensoren vorgegeben, die sich im wesentlichen mittig über den Ausnehmungen bewegen sollen. Dadurch werden störende Einflüsse der durchgehenden Randbereiche des Maßstabes minimiert und durch ihr im wesentlichen symmetrisches Auftreten weniger störend. Die Breite der durchgehenden Randbereiche richtet sich nach den mechanischen Beanspruchungen des Maßstabes und den geometrischen Gegebenheiten des Untergrundes, auf dem er angebracht wird und danach, ob eine Kompensations- und/oder Referenzspur vorgesehen ist.

Es können mehrere Maßstäbe mit unterschiedlicher Schrittweite parallel zueinander angeordnet werden, die durch entsprechend abgestimmte Meßköpfe bzw. Sensoren in einem gemeinsamen Meßkopf abgetastet werden und so ein von der Position abhängiges absolutes Meßsignal erzeugen. Dies ist auch durch einen Maßstab mit mehreren Meßspuren realisierbar. Es können die verschiedenen Einzelsensoren dabei auf einer gemeinsamen Feldplatte angeordnet sein.

Im Extremfall kann die zusätzliche Meßspur zu einem (oder einigen wenigen) Einzelfenster(n) mutieren, durch die nur spezielle, wichtige, absolute Orte entlang des Maßstabes erfaßt werden, wie dies in Fig. 6 dargestellt ist.

Dabei ist mit I die Spur mit den Referenzmarken, mit II die eigentliche Meßspur und mit III die Blankspur zur Erzeugung des Kompensationssignales bezeichnet. Ein einzelnes Referenzfenster ist in Spur I dargestellt.

Die Anbringung des Maßstabes auf dem Untergrund kann bevorzugt durch Kleben, aber auch auf andere Weise erfolgen, insbesonders wenn die Befestigungsstellen im durchgehenden Randbereich liegen, sodaß keine Beeinträchtigung der Meßergebnisse zu befürchten sind. Derartige Befestigungen können Punktschweissen, Schrauben, Nieten od.dergl. sein.

Schließlich ist auch die Form der Ausnehmungen 6 des Maßstabes nicht auf rechteckige oder auch nur rechtwinkelige geometrische Gebilde beschränkt, sondern kann beispielsweise rautenförmig, oval, aber auch kreisrund sein. Solche Formen sind insbesonders bevorzugt, wenn der Meßkopf auch Sensoren zur Erfassung der Spurlage aufweist, was in manchen Anwendungsgebieten (z.Bsp. bei Förderbändern) nützlich ist, da solche Ausnehmungen es erlauben, die Spurlage zu erfassen.

Bei derartigen geometrischen Ausbildungen tritt an Stelle der über die Meßbreite konstanten Werte für 1 bzw. s ein entsprechender Mittelwert, der in Kenntnis der Erfindung anhand einiger einfacher Versuche für die jeweilige Geometrie vom Fachmann leicht ermittelt werden kann.

## Patentansprüche

1. Magnetische Längen- bzw. Winkelmeßeinrichtung mit einem Permanentmagneten (3), an dem eine Feldplatte als Sensor (1) mit vier Magnetowiderständen als Einzelsensoren ($R_i$) angebracht ist und mit einem Maßstab (4), dessen magnetische Reluktanz sich entlang der Maßstablängsachse (L) mit dem Schritt (p) periodisch ändert, indem Bereiche hoher Reluktanz mit Länge (1) und Bereiche niedriger Reluktanz mit gleicher Länge (s) einander abwechseln und p - s +1 gilt, wobei die Einzelsensoren ($R_1$, $R_2$, $R_3$ und $R_4$) in Richtung der Maßstablängsachse mit Abstand zueinander angeordnet sind, dadurch gekennzeichnet, daß

   a) die Einzelsensoren ($R_i$) untereinander, in Richtung der Maßstablängsachse, folgende Abstände aufweisen:

$$d_1 = d_3 = (2k + 1)p/2$$

$$d_2 = kp - p/4,$$

   wobei

   k in jeder der Gleichungen unabhängig eine ganze, positive Zahl einschließlich der Null,
   $d_1$ der Abstand zwischen einem äußeren Einzelsensor ($R_1$, $R_4$) und seinem Nachbarn ($R_2$, $R_3$) und
   $d_2$ der Abstand zwischen den inneren Einzelsensoren ($R_2$, $R_3$), jeweils gemessen an korrespondierenden Enden der Einzelsensoren, ist und

   b) mit dem Sensor (1) verbunden, bevorzugt in ihn integriert, ein Kompensationssensor, bevorzugt ein Magnetowiderstand, vorgesehen ist, der geometrisch über einem Bereich des Maßstabes (4) angeordnet ist, dessen Reluktanz sich nicht ändert, und daß das Ausgangssignal des Kompensationssensors zur Kompensation der Änderung des Abtastabstandes (V) verwendet wird.

2. Meßeinrichtung nach Anspruch 1, dadurch gekennzeichnet, daß die Aufbereitung der von den Einzelsensoren ($R_i$) kommenden Signale mittels einer Wheatstone-Brücke erfolgt, bei der:

   a) die äußeren Einzelsensoren ($R_1$, $R_4$) und die inneren Einzelsensoren ($R_2$, $R_3$) einander gegenüberliegen,
   b) die Speisespannung (U) an zwei diagonal gegenüberliegenden Ecken anliegt und

c) die eigentlichen Meßsignale ($S_1$, $S_2$) zwischen jeweils einem der verbleibenden Ecken der Wheatstone-Brücke und der durch die Widerstände ($R_5$, $R_6$) der Brücke geteilten Speisespannung (U) abgenommen werden.

3. Meßeinrichtung nach einem der vorangehenden Ansprüche, dadurch gekennzeichnet, daß der Maßstab (4) eine Dicke von etwa 0,2 mm aufweist, mit einem filmartigen Schutzüberzug überzogen ist, und daß sein Schritt (p) etwa 1 mm beträgt.

4. Meßeinrichtung nach einem der vorangehenden Ansprüche, dadurch gekennzeichnet, daß der Vertikalabstand (V) zwischen der Oberseite des Weicheisenstreifens, der den Maßstab (4) bildet, und der Unterseite der Einzelsensoren ($R_i$) etwa 0,6 mm beträgt.

5. Meßeinrichtung nach einem der vorangehenden Ansprüche, dadurch gekennzeichnet, daß entweder zumindest zwei Maßstäbe (4) mit unterschiedlichem Schritt (p) parallel zueinander angeordnet sind, oder daß zumindest zwei Meßspuren mit unterschiedlichem Schritt (p) auf einem Maßstab vorgesehen sind, und daß jedem Maßstab bzw. jeder Meßspur ein eigener Sensor zugeordnet ist, dessen geometrische Abmessungen dem Maßstab entsprechen, wobei alle Sensoren in ihrer Lage zueinander fixiert sind.

6. Meßeinrichtung nach einem der vorangehenden Ansprüche, dadurch gekennzeichnet, daß die Ausnehmungen (6) im wesentlichen rechteckige Form aufweisen.

7. Meßeinrichtung nach einem der vorstehenden Ansprüche, dadurch gekennzeichnet, daß der Maßstab (4) auf einem dünnen, blanken, durchgehenden Band (8) aus weichmagnetischem Material aufgebracht, bevorzugt aufgeklebt, ist.

8. Meßeinrichtung nach einem der vorstehenden Ansprüche, dadurch gekennzeichnet, daß das Band (8) im wesentlichen die Dicke und Breite des Maßstabes (4) aufweist.

9. Meßeinrichtung nach einem der vorstehenden Ansprüche, dadurch gekennzeichnet, daß der Maßstab (4) neben der eigentlichen Meßspur (II) zumindest ein Referenzfenster in einer Referenzspur (I) zur Bestimmung einer absoluten Position aufweist.

10. Verfahren zur Herstellung eines Maßstabes (4) für eine Meßeinrichtung nach einem der vorstehenden Ansprüche, dadurch gekennzeichnet, daß die Vertiefungen bzw. Ausnehmungen (6) des Maßstabes (4) mittels eines fotolitografischen Verfahrens oder durch Verwendung eines Laser- oder Plasmastrahles geschaffen werden.

## Claims

1. A magnetical length- or angle measuring device with a permanent magnet (3) on which a field plate as sensor (1) with several single sensors ($R_i$) is mounted and with a scale (4), whith a magnetical reluctance which changes periodically with a pitch (p) along its axis (L) between intervals with high reluctance with a length (1) and intervals with low reluctance with the same length (s) follow one another, fulfilling the equation p = s + l, whereby the single sensors ($R_1$, $R_2$, $R_3$ and $R_4$) are positioned with a distance to each other in the direction of the scale axis, characterized in that

a) the single magnetic resistors ($R_i$) have, in direction of the axis of the sacale, the following relative distance to each other:

$$d_1 = d_3 = (2k+1)p/2$$

$$d_2 = kp - p/4,$$

whereby

k in each of the equations is independently a positive integer number or zero,
$d_1$ is the distance between an outer single sensor ($R_1$, $R_4$) and its neighbor ($R_2$, $R_3$) and
$d_2$ is the distance between the inner sensors ($R_2$, $R_3$), measured at the corresponding edges of the single sensors and that,

b) connected to the sensor (1), preferably integrated with it exists a compensation sensor, preferably a magnetic resistor, which geometrically scans a region of constant reluctance of the scale (4), which output signal is used for the compensation of the changes of the scanning distance (V).

2. Measuring device according to claim 1, characterized in that the processing of the signals coming from the single sensors ($R_i$) is done in a Wheatstone bridge whereby:

a) the outer single sensors ($R_1$, $R_4$) and the inner single sensors ($R_2$, $R_3$) are mounted opposite to each other,

b) the supply voltage (U) is applied at opposite points of the bridge and

c) each of the output measuring signals ($S_1$, $S_2$) is obtained between one of the remaining points of the bridge and an outer reference point laying between resistors ($R_5$, $R_6$) partitioning the supply voltage (U).

3. Measuring device according to one of the previous claims, characterized in that the scale (4) has a thickness of about 0,2 mm, is protected with a cover film and has a pitch of about 1 mm.

4. Measuring device according to one of the previous claims, characterized in that the vertical distance (V) between the upper surface of the scale (4) and the lower surface of the single sensors ($R_i$) of about 0,6 mm.

5. Measuring device according to one of the previous claims, characterized in that either at least two scales (4) with different pitch values (p) are parallel disposed, or at least two measuring tracks with different pitch values (p) are disposed on one scale, and each scale or track has its own sensor with adapted geometrie whereby all the sensors are solidely attached in their position relative to one another.

6. Measuring device according to one of the previous claims, characterized in that the grooves (6) have rectangular form.

7. Measuring device according to one of the previous claims, characterized in that the scale (4) is mounted, preferably glued, on a blank, continuous tape (8) of soft-magnetic steel.

8. Measuring device according to one of the previous claims, characterized in that the tape (8) has approximately the thickness and width of the scale (4).

9. Measuring device according to one of the previous claims, characterized in that the scale (4), beside the mesuring track (II), has at least a reference mark on a reference track (I) for the determination of the absolute position.

10. Method for the production of a scale (4) for a device according to one of the previous claims, characterized in that the grooves or deepings (6) of the scale (4) are realised by photolithography or by laser-cutting or plasma-cutting.

## Revendications

1. Dispositif magnétique de mesure de longueur ou d'angle, avec un aimant permanent (3), sur lequel est installée comme capteur (1) une magnétorésistance avec quatre résistances magnétiques comme capteurs individuels ($R_i$), et avec une règle graduée (4) dont la réluctance se modifie périodiquement avec le pas (p) le long de l'axe longitudinal (L) de la règle graduée, par le fait que des régions de réluctance supérieure de longueur (l) alternent avec des régions de réluctance inférieure de même longueur (s) et que p=s+l, les capteurs individuels ($R_1$, $R_2$, $R_3$ et $R_4$) étant disposés à distance les uns des autres dans la direction de l'axe longitudinal de la règle graduée, **caractérisé** en ce que

a) les capteurs individuels ($R_i$) présentent entre eux, dans la direction de l'axe longitudinal de la règle graduée, les distances suivantes :

$$d1 = d3 = (2k + 1)p/2$$

$$d2 = kp - p/4,$$

k étant, de façon indépendante dans chacune des équations, un nombre entier positif, zéro compris,

d1 étant la distance entre un capteur individuel extérieur ($R_1$, $R_4$) et son voisin ($R_2$, $R_3$) et,

d2 étant la distance entre les capteurs individuels intérieurs ($R_2$, $R_3$), respectivement mesurée aux extrémités correspondantes des capteurs individuels, et

b) un capteur de compensation, de préférence une résistance magnétique, relié au capteur (1), de préférence intégré dans ce dernier, étant prévu, ce capteur de compensation étant disposé géométriquement au-dessus d'une région de la règle graduée (4) dont la réluctance ne se modifie pas,

et en ce que le signal de sortie du capteur de compensation est utilisé pour compenser la modification de la distance de balayage (V).

2. Dispositif de mesure selon la revendication 1, **caractérisé** en ce que le traitement des signaux provenant des capteurs individuels ($R_i$) s'effectue au moyen d'un pont de Wheatstone, dans lequel

a) les capteurs individuels extérieurs ($R_1$, $R_4$) et les capteurs individuels intérieurs ($R_2$, $R_3$) se font face,

b) la tension d'alimentation (U) est appliquée en deux coins diagonalement opposés, et

c) les signaux de mesure proprement dits ($S_1$,

$S_2$) sont respectivement prélevés entre un des coins restants du pont de Wheatstone et la tension d'alimentation (U) divisée par les résistances ($R_5$, $R_6$) du pont.

3. Dispositif de mesure selon une des revendications précédentes, **caractérisé** en ce que la règle graduée (4) présente une épaisseur d'environ 0,2 mm et est revêtue d'un revêtement protecteur du genre film, et en ce que son pas (p) est égal à environ 1 mm.

4. Dispositif de mesure selon une des revendications précédentes, **caractérisé** en ce que la distance verticale (V) entre le dessus du ruban de fer doux qui constitue la règle graduée (4) et le dessous des capteurs individuels ($R_i$) est égale à environ 0,6 mm.

5. Dispositif de mesure selon une des revendications précédentes, **caractérisé** en ce que, soit au moins deux règles graduées (4) de pas (p) différents sont disposées parallèlement entre elles, soit au moins deux pistes de mesure de pas (p) différents sont prévues sur une règle graduée, et en ce qu'un propre capteur, dont les dimensions géométriques correspondent à la règle graduée, est associé à chaque règle graduée ou, selon le cas, à chaque piste de mesure, tous les capteurs présentant des positions relatives fixes.

6. Dispositif de mesure selon une des revendications précédentes, **caractérisé** en ce que les évidements (6) présentent essentiellement une forme rectangulaire.

7. Dispositif de mesure selon une des revendications précédentes, **caractérisé** en ce que la règle graduée (4) est apposée, de préférence collée, sur une mince bande (8) continue et nue de matériau magnétique doux.

8. Dispositif de mesure selon une des revendications précédentes, **caractérisé** en ce que la bande (8) présente essentiellement l'épaisseur et la largeur de la règle graduée (4).

9. Dispositif de mesure selon une des revendications précédentes, **caractérisé** en ce que la règle graduée (4) présente, à côté de la piste de mesure proprement dite (II), au moins une fenêtre de référence dans une piste de référence (I) afin de déterminer une position absolue.

10. Procédé de fabrication d'une règle graduée (4) pour un dispositif de mesure selon une des revendications précédentes, **caractérisé** en ce que les creux ou évidements (6) de la règle graduée (4) sont créés au moyen d'un procédé photolithographique ou par l'utilisation d'un rayon laser ou d'un jet de plasma.

Fig. 1

Fig. 2

Fig. 3

Fig. 4

Fig. 5

Fig. 6